# EUROPEAN PATENT APPLICATION

(11) **EP 1 106 229 A1**
(43) Date of publication of application: **13.06.2001**
(21) Application number: 00125367.3
(22) Date of filing: 01.12.2000
(51) Int. Cl.: B01D 45/04, B01D 45/06, B01D 45/08, F25B 43/02

(54) **Oil separator**

(30) Priority: 03.12.1999 IT VI990248
(71) Applicant: Frigomec S.r.l., 37048 S. Pietro di Legnago (VR) (IT)
(72) Inventor: Vignoli, Giovanni, 37045 Legnago (VR) (IT); Vignoli, Paolo, 37045 Vigo di Legnago (VR) (IT)
(74) Representative: Bonini, Ercole

(57) **Abstract**

An oil separator (1) for refrigerant fluids comprising: a tubular lodge (2) closed at the ends through an upper cap (21) and a lower cap (22), provided with an inlet (5) of the refrigerant fluid (10) to be separated from oil and an outlet (7) for the fluid separated from oil and containing a central filtering unit (3) consisting of a tubular envelope (30) inside provided with a filtering mass (35). Between tubular envelope (30) and the inner surface of the tubular body (2) there is a annular chamber (62) in which there is a peripheral filtering unit (50) through which the refrigerant fluid (10) coming from the inlet (5) is flowing.

## Description

The present invention relates to an improved oil separator, more particularly adapted to be used in refrigerant equipments.

It is well known that the refrigerant equipments generally consist of a condenser and an evaporator series connected to one another, inside which a refrigerant fluid is circulated, said fluid being pressurized by a compressor whose delivery is connected to the condenser and the intake is connected to the evaporator.

During the compression, the refrigerant fluid contacts the compressor lubricating oil and drags a portion of it that must be separated and fed again to the compressor sump before the compressed refrigerant fluid enters the condenser.

To this purpose an element of the refrigerant equipment is an oil separator inserted in the circuit downstream the compressor delivery duct and upstream the condenser.

Some known separators available on the market carry out separation of oil from the refrigerant fluid in which said oil is dispersed, through centrifugal separation means in which the refrigerant fluid mixed with oil is tangentially deviated.

This causes oil separation by centrifugation, said oil falling by gravity to the bottom of the separator where it is collected and sent again to the compressor sump.

In some other known separators, separation of oil from the refrigerant fluid occurs by imparting to the refrigerant fluid a helical motion adapted to generate a vortex that also in this case fosters oil separation by centrifugal force. In some other known embodiments, oil separation occurs by obliging the refrigerant fluid to pass through filter nets that opposing the oil particles cause their speed loss until the particles stop and fall by gravity to the separator bottom.

In some other known separators, the filtering action is due to a hydrodynamic process using the greater inertia of the oil particles in comparison with the gaseous particles of the refrigerant liquid in which they are dispersed and occurring when the fluid undergoes a deceleration and/or a sharp direction change.

Oil separators are also known in which abatement of oil in the refrigerant fluid occurs by combining the filtering action due to the metal nets or filtering skeins of various shapes, with a separation action by means of the above mentioned centrifugal, helical motion or hydrodynamic processes.

Thus it is for example known U.S. patent 2.608.269 disclosing a separating filter in which oil separation occurs firstly by a hydrodynamic separation process due to the reduction of the fluid velocity while passing through the filter chambers and then abatement by a spongy skein before using again the oil free refrigerant fluid.

Oil separators are also known, providing for the insertion into the filter of filtering cartridges arranged inside acceleration and /or deceleration chambers. The above mentioned known filters have however the limitation not to be able to obtain an oil separation greater then standard values which are substantially common to all the known filters.

The present invention aims to overcome said limitation.

More particularly a first object of the invention is to provide a filter being able to carry out at the same delivery, filtering degrees higher than those possible with known separators.

Another object of the invention is to obtain such a greater filtering degree by a filter having a size equivalent to the known filters.

Said objects are attained by providing an oil separator particularly adapted to be used for refrigerant fluids that according to the main claim comprises: a tubular body closed at the ends by an upper cap and a lower cap; an inlet of said refrigerant fluid to be separated from the oil made in said tubular body; an outlet of said oil freed fluid made in said tubular body; a central filtering unit arranged inside said tubular body, consisting of a tubular envelope containing filtering mass, connected to said outlet and having an opening in communication with the inner room of said tubular body; characterized in that between said tubular envelope and the inner surface of said tubular body there is a tubular chamber in which a second peripheral filtering unit is provided, through which said refrigerant fluid coming from said inlet is caused to pass. According to a preferred embodiment of the oil separator of the invention, the second peripheral filtering unit consists of a metal net so arranged as to form a tubular element surrounding the central filtering unit and having an annular corrugated continuous cross sectional profile.

The foregoing objects and advantages will be better understood from the description of a preferred embodiment of the invention given as an illustrative and non-limiting example and shown in the accompanying sheets of drawings in which:
- Fig. 1 is a longitudinal sectional view of the oil separator of the invention;
- Fig. 2 is a cross sectional view of the oil separator taken along the line Il-Il of Fig. 1; and
- Fig. 3 is a view of a detail of the oil separator of Fig. 1.

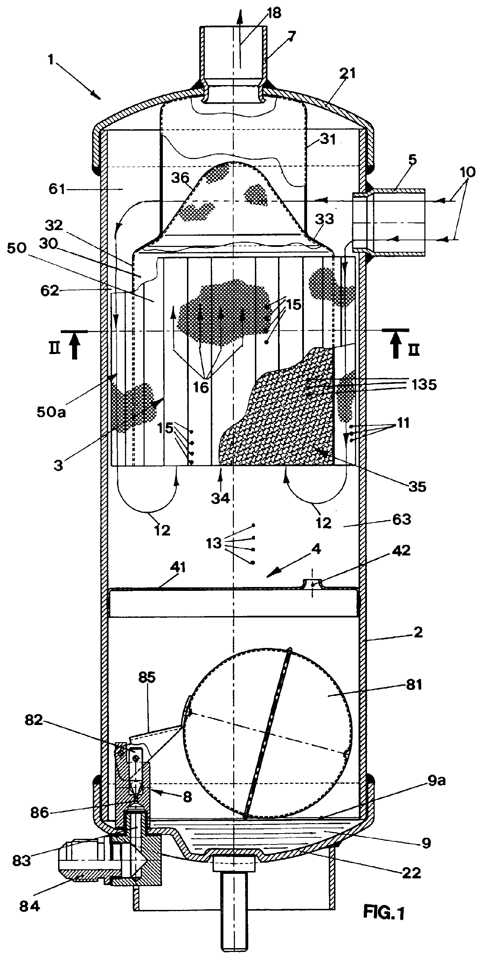

As shown in Fig. 1 the oil separator of the invention generally indicated with reference numeral 1, is preferably applied to a refrigerant equipment comprising a compressor, an evaporator and a condenser not shown in the drawings.

The oil separator comprises a tubular body 2 with the ends closed by an upper cap 21 and a lower cap 22, said body having an inlet 5 for the refrigerant fluid 10 to be separated from oil, coming for example from the compressor delivery and an outlet 7 in communication for instance with the delivery duct to said compressor of the oil freed fluid 18.

Inside the tubular body 2 there is a central filtering unit 3 consisting of a tubular envelope 30 containing a filtering mass 35, connected to the outlet 7 and provided with an opening 34 in communication with the inner room of the tubular body 2.

As to the central filtering unit 3 the tubular envelope 30 comprises a first zone 31 fixed to the upper cap 21 and communicating with the outlet 7 and the second zone 32 ending with the opening 34 communicating with the inner room of the tubular body 2.

The first zone 31 and the second zone 32 are connected to one another by a frustum conical collar 33.

It is to be noted that the first zone 31 has a smaller cross section relative to the second zone 32 so that the first zone 31 defines together with the side wall of the tubular body 2 a collecting chamber 61.

Inside the second tubular zone 32 there is the filtering mass 35 consisting of a continuous wire 135 entangled in a random and chaotic way so as to make a spongy mass carrying out the filtering action.

According to the invention between the tubular envelope 30 and the inner surface of the tubular body 2 there is a tubular chamber 62 in which there is a peripheral filtering unit crossed by the refrigerant fluid 10 coming from the inlet 5.

According to the preferred embodiment of the invention herein described, the peripheral filtering unit consists of a metal net 50.

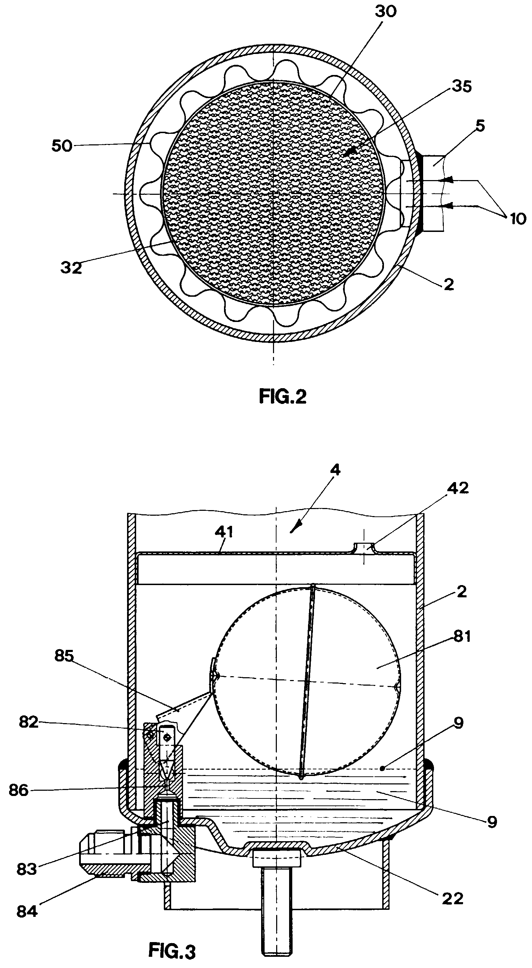

As shown in Fig. 2, the metal net 50 defines a tubular element 50a arranged longitudinally inside the tubular chamber 62 for at least a portion of its length, surrounding the tubular zone 32 and having a continuous corrugated cross sectional profile.

In the substantially central zone of the tubular body 2 and below the opening 34 there is a partition 4 whose surface 41 covers transversally the entire section of the tubular body 2 defining an expansion chamber 63 in communication with the tubular chamber 62.

The surface 41 of partition 4 collects oil separating from the fluid to be filtered and falling down by gravity.

The surface 41 is also provided with a plurality of holes 42 arranged peripherally and allowing the collected oil to fall to the bottom of the tubular body 2 and to be collected at the lower cap 22 so as to form an oil layer 9. In the tubular body 2 below the partition 4 there is a discharge unit for the collected oil generally indicated by reference numeral 8.

The discharge unit 8 comprises a float 81 floating on the surface 9a of oil layer 9 and is mechanically connected to a plug 82 opening or closing the passage 86 of a duct 83 communicating with the external ambient through a connection sleeve 84 applied on the lower cap 22.

In operation when the flow of fluid 10 to be separated from oil coming from the delivery of the compressor passes through inlet 5, the fluid enters the collecting chamber 61 and descends with direction indicated by arrow 12 down the tubular chamber 62 increasing its speed as the tubular chamber 62 has a smaller section relative to the collecting chamber 61.

Inside the tubular chamber 62 fluid 10 contacts the metal net 50 undergoing a first filtering action which is particularly efficient in view of the progressive deceleration of oil particles 11 which impact the metal net, lose velocity and fall down by gravity.

Has already noted, metal net 50 envelopes the central filtering unit 3 and has a corrugated continuous cross sectional profile so as to make the filtering surface as wide as possible.

However it is clear that other embodiments may be provided with metal nets of different shape and arrangement and even the filtering means may be different from metal nets as well.

Then fluid 10 enters the expansion chamber 63 where it undergoes a sharp deceleration because the cross section of the expansion chamber 63 is considerably bigger relative to the cross section of the tubular chamber 62. This change of velocity carries out a further separation of oil particles in view of the different inertia that these particles have in comparison with the fluid containing them. The separation is also fostered by the fact that there is also a change in the velocity direction as indicated by arrow 12 shown in Fig. 1, when the refrigerant fluid enters the central filtering unit 3 through the opening 34. In view of this velocity variation as to module and direction, separation of further droplets of lubricating oil 13 descending by gravity occurs.

The fluid to be separated from oil then enters the central filtering unit 3 where contacts the filtering mass 35 made by continuous wire to prevent possible break away of particles that would cause equipment damages if detached and put in circulation.

The continuous wire has a further efficient action of oil separation because obliges the crossing fluid to undergo continuous direction changes and continuous impacts against itself so as to cause a progressive loss of speed to the last oil particles still remaining until they stop and fall down by gravity. During this stage droplets 15 descending by gravity are separated from the refrigerant fluid.

The fluid that is now practically oil free continuous upwards with direction 16 where, before going out through outlet 7, passes through an optional safety filter 36 consisting of a net arranged in the first zone 31 of the tubular envelope 30 so as to block possible oil still present in the fluid, which is separated in the form of falling droplets 17.

Oil droplets 11, 13, 15 and 17 detached from fluid, during their fall find surface 41 of the partition 4 and are stopped. Through holes 42 oil descends by gravity into the lower cap 22 where the oil layer 9 is formed.

The fluid so separated from oil continuous with direction 18 through the outlet 7 and in the lower cap 22 the oil layer 9 is left.

Therefore it is clear that the oil separator carries out its function by exploiting four actions occurring sequentially.

The first action carried out by the separator on the fluid to be separated from oil consists of the separation of oil from fluid by impact against the metal net 50 generating the droplets 11.

The second action is the subsequent separation occurring with generation of droplets 13 due to the sharp variation of direction and module that fluid velocity undergoes when passing from the tubular chamber 62 to the expansion chamber 63 before entering the filtering unit 3.

The third action is carried out by the spongy mass 35 with separation of droplets 15 whose volume is suitably sized to obtain the maximum efficiency result in separating oil from gas. The separation is optimal in comparison with other known systems because the gas-oil mixture is obliged to undergo continuous changes of direction when meeting the continuous wound wire 135 constituting the spongy mass 35.

In view of their inertia the oil particles do not succeed to follow the zigzaging fluid flow that follows the development of the wire forming the filtering mass and therefore the particles go on in a straight line with continuous impacts against the wire forming the filtering mass. Therefore the oil particles lose speed, become bigger joining one another until they become droplets 15 collected at the lower cap 22.

Finally the fourth action is carried out by the safety filter 36 that has preferably a conical shape with radiused vertex having the function of last filter in order to warrant, by detaching possible further droplets 17 still present in the fluid, that the flow 18 coming out from the filtering unit and delivered to the equipment evaporator is wholly oil free.

The presence of such safety filter 36 allows also to block impurities that would possibly escape from the dams formed by the preceding filters.

A particular feature of the separator of the invention consists in that it can operate even inverting the direction of movement of the fluid to be separated from oil, in other words by causing the fluid to enter through the outlet 7 and go out through the inlet 5.

As a matter of fact if the fluid to be separated from oil travels through the separator along the direction opposite to the above described one, it undergoes the same variations of velocity because it goes through the same expansion chambers and the same filtering surfaces even if this occurs in a different order.

Therefore the fluid undergoes the same effect of oil separation. This feature helps also the user that can choose the most rational and cost effective connection.

It is to be noted that at the lower cap 22 there is the oil discharge device generally indicated with reference numeral 8 and already described in the foregoing, wherein the float 81 is connected through a connecting rod 85 to the plug 82.

Indeed when the surface 9a of the oil layer 9 goes above a predetermined level as shown in Fig. 3, lifting of float 81 causes displacement of plug 82 opening passage 86 of duct 83.

Pressure existing inside the separator pushes oil 9 through duct 83 and from this duct to the oil sump of the compressor.

Oil discharge continuous until the surface 9a of the oil layer 9 returns to the height in which float 81 closes again plug 82.

From the foregoing description it is to be understood that the oil separator of the invention attains all the above mentioned objects and advantages.

The oil separator of the invention may have different practical embodiments according to the kind of intended use, rate of flow to be treated and also as a function of the mechanical systems allowing to fix the separator to any support member.

In the executive stage it is also possible to modify the form of the oil discharge unit as well as the form of the filtering unit as a whole.

Furthermore the spongy mass carrying out the filtering action may have any density and therefore may be made with a continuous wire of any diameter. The safety filter may also have any desired shape and be provided with holes of size adapted to the intended use.

It is to be understood that further variations even not mentioned but in any way based on the described solution, are to be intended as covered by present patent.

## Claims

1. An oil separator (1) for refrigerant fluids comprising:
- a tubular body (2) closed at the ends by an upper cap (21) and a lower cap (22);
- an inlet (5) for said refrigerant fluid (10) to be separated from oil made in said tubular body (2);
- an outlet (7) of said fluid separated from oil (18) made in said tubular body (2);
- a central filtering unit (3) arranged inside said tubular body (2), consisting of a tubular envelope (30) containing a filtering mass (35), connected to said outlet (7) and provided with an opening (34) communicating with the inner room of said tubular body (2);
characterized in that between said tubular envelope (30) and the inner surface of said tubular body (2) there is a tubular chamber (62) in which there is a peripheral filtering unit (50) through which said refrigerant fluid (10) coming from said inlet (5) is flowing.

2. The oil separator (1) according to claim 1) characterized in that said peripheral filtering unit consists of a metal net (50) of tubular shape (50a) arranged longitudinally inside said tubular chamber (62) for at least a portion of its length.

3. The oil separator (1) according to claim 2) characterized in that said metal net (50) has a cross sectional shape of a continuous corrugated closed ring profile.

4. The oil separator (1) according to claim 1) characterized in that said tubular envelope (30) comprises:
- a first tubular zone (31) fixed to said upper cap (21), communicating with said outlet (7) and defining with said tubular body (2) a collecting chamber (61) communicating with said inlet (5);
- a second tubular zone (32) arranged as an extension of said first tubular zone (31) and defining with said tubular body (2) said tubular chamber (62) communicating with said collecting chamber (61).

5. The oil separator (1) according to claim 4) characterized in that said second tubular zone (32) and said first tubular zone (31) are connected to each other through a frustum conical connection collar (33).

6. The oil separator (1) according to claim 4) characterized in that said second tubular zone (32) is provided with an opening (34) communicating with the inner room of said tubular body (2).

7. The oil separator (1) according to claim 4) characterized in that inside said second tubular zone (32) said filtering mass (35) is arranged, said mass consisting of a continuous wire (135) entangled in a random and chaotic way so as to form a spongy mass (35).

8. The oil separator (1) according to claim 4) characterized in that the cross section of said tubular chamber (62) is smaller in comparison with the cross section of said collecting chamber (61), the cross section of said second tubular zone (33) being greater in comparison with the cross section of said first tubular zone (31), said tubular chamber (62) constituting an acceleration chamber for said refrigerant fluid (10).

9. The oil separator (1) according to claim 6) characterized by comprising a partition (4) arranged transversally inside said tubular body (2) below said opening (34) of said tubular zone (32) defining an expansion chamber (63) communicating with said tubular chamber (62).

10. The oil separator (1) according to claim 9) characterized in that said partition (4) has a surface (41) provided with a plurality of holes (42) arranged on its periphery.

11. The oil separator (1) according to claim 1) characterized by comprising a discharge unit (8) of the oil collected in said lower cap (22) comprising a float (81) mechanically connected to a plug (82) co-operating with the path (86) of a duct (83) projecting from said lower cap (22) through a connection sleeve (84).

12. The oil separator (1) according to claim 4) characterized in that a filtering net (36) arranged between said second tubular zone (31) and said outlet (7) is provided in said first tubular zone (31).
